# EUROPÄISCHE PATENTANMELDUNG

(11) **EP 1 607 688 A2**
(43) Veröffentlichungstag der Anmeldung: **21.12.2005**
(21) Anmeldenummer: 05011983.3
(22) Anmeldetag: 03.06.2005
(51) Int. Cl.: F24D 19/10

(54) **Solarthermische Heizungsanlage**

(30) Priorität: 17.06.2004 DE 102004029392
(71) Anmelder: REHAU AG + Co, 95111 Rehau (DE)
(72) Erfinder: Herrmann, Henry, 92318 Neumarkt i.d. Opf. (DE); Dietz, Eckhard, 08860 Castelldefels (Barcelona) (ES)

(57) **Zusammenfassung**

Bei einer solarthermischen Heizungsanlage (1) ist zur gezielten Steuerung und/oder Regelung einer autarken fossilen Heizvorrichtung (5) vorgesehen, dass eine Sensor-Heizvorrichtung (11) mit einem Speicherbehälter-Temperatursensor (6) der fossilen Heizvorrichtung (5) zur Beheizung von diesem in Wärmekontakt bringbar ist und mit einer Temperatur-Regelvorrichtung (7) in Signalverbindung steht. Ein unerwünschter Parallelbetrieb der solarthermischen Heizungsanlage (1) und der fossilen Heizvorrichtung (5) kann somit vermieden werden.

## Beschreibung

Die Erfindung betrifft eine solarthermische Heizungsanlage nach dem Oberbegriff des Anspruches 1.

Derartige bekannte solarthermische Heizungsanlagen werden für die Warmwasserbereitung und/oder Gebäudeheizung eingesetzt.

Solarthermische Heizungsanlagen können über das Jahr gesehen den Energiebedarf für die Warmwasserbereitung und/oder die Heizung eines Gebäudes nicht vollständig decken. Aus diesem Grund müssen solarthermische Heizungsanlagen durch konventionelle, also insbesondere fossile oder auf Wärmepumpen basierende Heizungsanlagen unterstützt werden. Die Heizungsregelung der konventionellen Heizungsanlage misst hierfür über einen Temperatursensor die Temperatur der in einem Speicherbehälter gespeicherten Wassermenge und startet bei Unterschreiten einer Solltemperatur die konventionelle Nachheizung.

Stellt die Heizungsregelung der solarthermischen Heizungsanlage gegenüber der konventionellen Heizungsregelung ein autarkes System dar, wie dies bei unterschiedlichen Herstellern der Fall ist, so ist in der Praxis eine Kommunikation der solaren Heizungsregelung und der konventionellen Heizungsregelung nicht gegeben. Somit kann es unerwünscht zu einem gleichzeitigen Heizen der solarthermischen und konventionellen Heizungsanlage kommen. Die Heizung erfolgt somit parallel mit konventioneller Energie, obwohl ausreichend solare Energie zur Verfügung steht. Die fehlende Kommunikation zwischen solarer und konventioneller Heizungsregelung hat demnach zur Folge, dass solare Energie verschenkt wird und ein energetischer Nachteil im Vergleich zu Heizungsanlagen, bei denen die solare und konventionelle Heizungsregelung integriert sind, vorliegt.

Hiervon ausgehend liegt der Erfindung die Aufgabe zugrunde, eine solarthermische Heizungsanlage der eingangs genannten Art derart weiterzubilden, dass auch bei fehlender Kommunikation zwischen der solaren und der konventionellen Heizungsregelung ein unerwünschter Parallelbetrieb der zugehörigen Heizungsanlagen vermieden ist.

Diese Aufgabe wird erfindungsgemäß durch eine solarthermische Heizungsanlage mit den Merkmalen des Kennzeichnungsteils des Anspruches 1 gelöst.

Der Begriff "konventionelle Heizvorrichtung" umfasst nachfolgend im Zusammenhang mit der Beschreibung der Erfindung jede Art von Heizvorrichtungen, deren Wärmeerzeugung nicht auf der zeitnahen Umsetzung von Solarenergie beruht. Als Temperaturspeichermedium der Solar-Heizvorrichtung kann eine Flüssigkeit, z. B. Wasser oder Speicheröl, oder auch ein nicht flüssiges Medium, z. B. Paraffin, dienen.

Der Kern der Erfindung besteht darin, dass bei ausreichend vorhandener Solarenergie der Speicherbehälter-Temperatursensor mittels der Sensor-Heizvorrichtung derart thermisch beeinflusst wird, dass der konventionellen Heizvorrichtung eine höhere Temperatur des Wassers und somit keine Notwendigkeit des Aufheizens durch die konventionelle Heizvorrichtung vorgespiegelt wird. Die konventionelle Heizvorrichtung kann somit bei Bedarf ohne direkten Eingriff in deren Regelung durch die externe thermische Beeinflussung mittels der Sensor-Heizvorrichtung durch die solarthermische Heizungsanlage außer Betrieb gesetzt werden. Die Ansteuerung der Sensor-Heizvorrichtung erfolgt hierbei durch die Temperatur-Regelvorrichtung der solarthermischen Heizungsanlage. Bei ausreichend vorhandener Solarenergie wird auf diese Weise keine Solarenergie verschenkt und somit ein energetischer Nachteil vermieden. Außerdem muss infolge der externen thermischen Beeinflussung nicht direkt in die konventionelle Heizvorrichtung eingegriffen werden, so dass es insbesondere nicht zum Erlöschen der Herstellergarantie bei der konventionellen Heizvorrichtung kommt.

Die Temperatur-Regelvorrichtung nach Anspruch 2 verarbeitet die analog-digital gewandelten Messsignale und steuert die Sensor-Heizvorrichtung an. Im Gegensatz dazu ist auch eine analoge Regelungs- und Steuerungseinheit zur Ansteuerung der Sensor-Heizvorrichtung, z. B. über entsprechend geformte Bimetall-Schalter, möglich. Die digitale Regelungs- und Steuerungseinheit ermöglicht eine komfortable und flexible Ansteuerung der Sensor-Heizvorrichtung.

Der Solar-Sensor nach Anspruch 3 ermöglicht jederzeit eine exakte Messung der Sonneneinstrahlung und somit eine Beurteilung des solaren Energieeintrages. Alternativ zu einer Sonneneinstrahlungsmessung ist eine Messung der Temperatur eines Solarkollektors der Solar-Heizvorrichtung möglich. Ein entsprechender Temperatursensor kann auch entfernt von der Solar-Heizvorrichtung angeordnet sein. In Abhängigkeit des Messsignals des Solar-Sensors kann die Regelungs- und Steuerungseinheit die Ansteuerung der Solar-Heizvorrichtung durchführen.

Der Solar-Speicherbehälter-Temperatursensor nach Anspruch 4 ermöglicht der solarthermischen Heizungsanlage eine eigene Messung der Wassertemperatur im Speicherbehälter. Mit diesem Temperatursignal kann die solarthermische Heizungsanlage mittels der Temperatur-Regelvorrichtung eine Regelung der Wassertemperatur im Speicherbehälter durchführen.

Die Heizmanschette nach Anspruch 5 ermöglicht der Sensor-Heizvorrichtung eine effiziente und räumlich gleichmäßige Beheizung des Speicherbehälter-Temperatursensors und somit eine entsprechende Beeinflussung des Sensorwertes des Speicherbehälter-Temperatursensors der konventionellen Heizvorrichtung.

Die Heizmanschette nach Anspruch 6 kann wirkungsvoll und einfach regelbar beheizt werden.

Zum Schutz der Heizmanschette gegenüber Beschädigungen ist nach Anspruch 7 eine Schutz- bzw. Tauchhülse vorgesehen.

Im Falle der Montage des Speicherbehälter-Temperatursensors im Inneren des SpeicherBehälters ist eine Schutzhülse nach Anspruch 8 vorteilhaft. Die Sensor-Heizvorrichtung kann somit wirkungsvoll z. B. vor Kurzschlüssen geschützt werden.

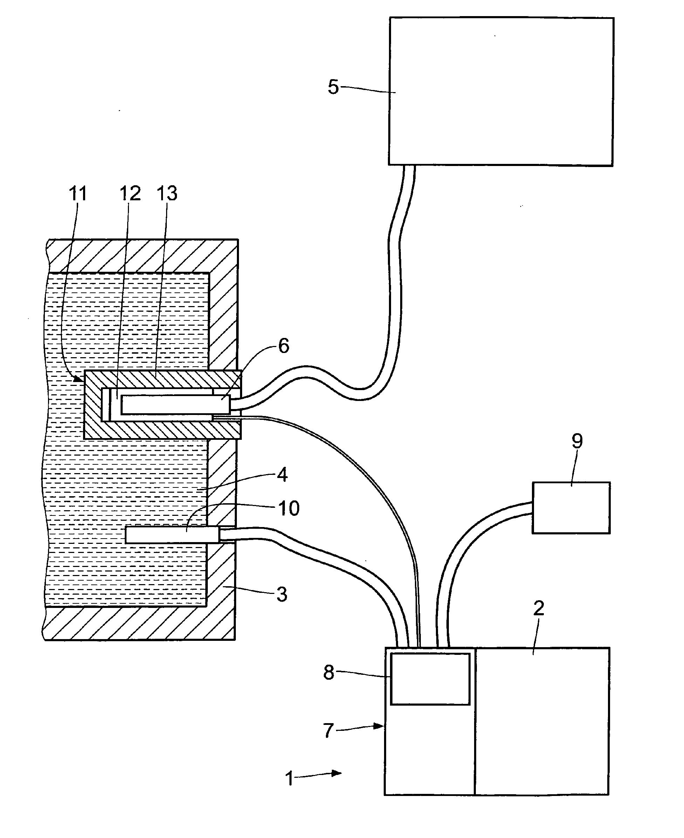

Nachfolgend wird die Erfindung anhand eines bevorzugten Ausführungsbeispieles in Verbindung mit der Zeichnung näher beschrieben. Diese zeigt eine schematische Darstellung einer erfindungsgemäßen solarthermischen Heizungsanlage.

Eine als Ganzes mit 1 bezeichnete solarthermische Heizungsanlage umfasst eine Solar-Heizvorrichtung 2 zum Aufheizen einer in einem Speicherbehälter 3 vorliegenden Menge Wasser 4. Die solarthermische Heizungsanlage 1 wirkt mit einer fossilen Heizvorrichtung 5 zusammen. Die fossile Heizvorrichtung 5 umfasst einen nicht näher dargestellten Heizkessel für Öl, Gas oder Festbrennstoffe, Wärmepumpen sowie eine Heizungsregelung. Zur Messung der Wassertemperatur im Speicherbehälter 3 ist im Inneren des Speicherbehälters 3 ein Speicherbehälter-Temperatursensor 6 angeordnet, der mit der fossilen Heizvorrichtung 5 in Signalverbindung steht.

Die solarthermische Heizungsanlage 1 weist weiterhin eine Temperatur-Regelvorrichtung 7 mit einer digitalen Regelungs- und Steuerungseinheit 8 auf. Die digitale Regelungs- und Steuerungseinheit 8 steht in Signalverbindung mit einem Solar-Sensor 9 zur Messung der Sonneneinstrahlung, einem Solar-Speicherbehälter-Temperatursensor 10 zur Messung der Wassertemperatur im Speicherbehälter 3 und einer Sensor-Heizvorrichtung 11. Die Sensor-Heizvorrichtung 11 umfasst eine den Speicherbehälter-Temperatursensor 6 umgebende und elektrisch beheizbare Heizmanschette 12 sowie eine Schutzhülse 13, die die Heizmanschette 12 und den Speicherbehälter-Temperatursensor 6 im Inneren des Speicherbehälters 3 wasserdicht umgibt. Der Solar-Sensor 9 ist in räumlicher Nähe zur Solar-Heizvorrichtung 2, idealer Weise auf dem Dach eines Gebäudes, angeordnet. Der Solar-Speicherbehälter-Temperatursensor 10 ist analog zum Speicherbehälter-Temperatursensor 6 im Inneren des Speicherbehälters 3 angeordnet. Eine Anordnung an anderer Stelle, z. B. an geeigneter Stelle im Rohrleitungssystem oder in einem zur solarthermischen Heizungsanlage 1 gehörigen zweiten Speicherbehälter, ist ebenfalls möglich. Zwischen der solarthermischen Heizungsanlage 1 und der Heizungsregelung der fossilen Heizvorrichtung 5 besteht keine Signalverbindung.

Im Folgenden wird die Funktionsweise der solarthermischen Heizungsanlage 1 in Zusammenwirkung mit der fossilen Heizvorrichtung 5 genauer beschrieben. Zunächst wird davon ausgegangen, dass zur Aufheizung des im Speicherbehälter 3 gespeicherten Wassers 4 genügend Solarenergie vorhanden ist. Dies wird vom Solar-Sensor 9 erkannt und als Messsignal an die Temperatur-Regelvorrichtung 7 weitergegeben. Das analoge Messsignal des Solar-Sensors 9 wird durch einen Analog-Digital-Wandler der digitalen Regelungs- und Steuerungseinheit 8 als digitale Messwerte zur Verfügung gestellt. Die digitale Regelungs-und Steuerungseinheit 8 erkennt aus den digitalen Messwerten, dass genügend Solarenergie zur Verfügung steht.

Folglich wird an die Sensor-Heizvorrichtung 11 ein Signal zur Beheizung des Speicherbehälter-Temperatursensors 6, der in Signalverbindung mit der fossilen Heizvorrichtung 5 steht, gegeben. Durch dieses Signal wird die elektrisch beheizbare Heizmanschette 12 angesteuert, die den Speicherbehälter-Temperatursensor 6 umgibt und von einer Schutzhülse 13 im Inneren des Speicherbehälters 3 wasserdicht aufgenommen wird. Die in Wärmekontakt mit dem Speicherbehälter-Temperatursensor 6 stehende Heizmanschette 12 erwärmt den Speicherbehälter-Temperatursensor 6 solange, bis der fossilen Heizvorrichtung 5 eine Temperatur des Wassers 4 vorgespiegelt wird, die über der gewünschten Solltemperatur der fossilen Heizvorrichtung 5 liegt. Die fossile Heizvorrichtung 5 ist nun funktionslos, heizt also nicht. Sinkt die Temperatur des Wassers 4 im Speicherbehälter 3 unterhalb eine gewünschte Solltemperatur, so wird dies vom Solar-Speicherbehälter-Temperatursensor 10 erkannt und an die Temperatur-Regelvorrichtung 7 weitergegeben. Das analoge Temperatursignal wird wiederum durch einen Analog-Digital-Wandler in digitale Messwerte umgewandelt und der digitalen Regelungs- und Steuerungseinheit 8 zur Verfügung gestellt. Diese erkennt die Notwendigkeit des Nachheizens des gespeicherten Wassers 4 und steuert die Solar-Heizvorrichtung 2 derart an, dass das im Speicherbehälter 3 vorliegende Wasser 4 erhitzt wird. Dies kann durch das Starten einer Umwälzpumpe erfolgen, die das im Speicherbehälter 3 vorliegende Wasser 4 durch heiße Rohre in der Solar-Heizvorrichtung 2 pumpt. Dies erfolgt solange, bis das gespeicherte Wasser 4 im Speicherbehälter 3 auf die gewünschte Solltemperatur erhitzt ist und der Solar-Speicherbehälter-Temperatursensor 10 dies erkennt und an die digitale Regelungs- und Steuerungseinheit 8 weitergibt.

Erkennt die Temperatur-Regelvorrichtung 7 aus den Messwerten des Solar-Sensors 9 und des Solar-Speicherbehälter-Temperatursensors 10, dass nicht genügend Solarenergie vorhanden ist, gibt die Temperatur-Regelvorrichtung 7 an die Sensor-Heizvorrichtung 11 das Signal, dass die Heizmanschette 12 nicht mehr länger elektrisch beheizt werden soll. Daraufhin kühlt die Heizmanschette 12 ab und der Speicherbehälter-Temperatursensor 6 misst wieder die tatsächliche Temperatur des Wassers 4. Stellt der Speicherbehälter-Temperatursensor 6 nun fest, dass die Wassertemperatur unterhalb der gewünschten Solltemperatur liegt, so startet die Heizungsregelung der fossilen Heizvorrichtung 5 das Nachheizen des Wassers 4 im Speicherbehälter 3. Dies erfolgt wiederum solange, bis die gewünschte Solltemperatur des Wassers 4 im Speicherbehälter 3 erreicht ist. Die Nachheizung der fossilen Heizvorrichtung 5 kann somit durch die solarthermische Heizungsanlage 1 gezielt unterdrückt werden, so dass die vorhandene Solarenergie in vollem Umfang genutzt werden kann.

Dies erfolgt durch eine externe Beeinflussung der fossilen Heizvorrichtung 5, so dass in die Heizungsregelung der fossilen Heizvorrichtung 5 nicht direkt eingegriffen werden muss. Im Falle einer unzureichenden Menge an Solarenergie kann die Unterdrückung der fossilen Heizvorrichtung 5 jederzeit abgeschaltet werden.

## Patentansprüche

1. Solarthermische Heizungsanlage (1) umfassend
- eine Solar-Heizvorrichtung (2) zum Aufheizen eines in einem Speicherbehälter (3) vorliegenden Temperaturspeichermediums (4), und
- eine Temperatur-Regelvorrichtung (7) zur Zusammenwirkung mit einem Speicherbehälter-Temperatursensor (6) einer konventionellen Heizvorrichtung (5), **gekennzeichnet durch** eine Sensor-Heizvorrichtung (11), welche
- mit dem Speicherbehälter-Temperatursensor (6) zur Beheizung von diesem in Wärmekontakt bringbar ist, und
- mit der Temperatur-Regelvorrichtung (7) in Signalverbindung steht.

2. Solarthermische Heizungsanlage nach Anspruch 1, **dadurch gekennzeichnet, dass** die Temperatur-Regelvorrichtung (7) eine digitale Regelungs- und Steuerungseinheit (8) aufweist.

3. Solarthermische Heizungsanlage nach Anspruch 2, **dadurch gekennzeichnet, dass** die Solar-Heizvorrichtung (2) einen mit der Regelungs- und Steuerungseinheit (8) verbundenen Solar-Sensor (9) zur Messung der Sonneneinstrahlung aufweist.

4. Solarthermische Heizungsanlage nach Anspruch 2 oder 3, **dadurch gekennzeichnet, dass** die Solar-Heizvorrichtung (2) einen mit der Regelungs- und Steuerungseinheit (8) verbundenen Solar-Speicherbehälter-Temperatursensor (10) zur Messung der Wassertemperatur im Speicherbehälter (3) aufweist.

5. Solarthermische Heizungsanlage nach einem der vorangegangenen Ansprüche, **dadurch gekennzeichnet, dass** die Sensor-Heizvorrichtung (11) eine Heizmanschette (12) aufweist.

6. Solarthermische Heizungsanlage nach Anspruch 5, **dadurch gekennzeichnet, dass** die Heizmanschette (12) elektrisch beheizbar ist.

7. Solarthermische Heizungsanlage nach einem der vorangegangenen Ansprüche, **dadurch gekennzeichnet, dass** die Sensor-Heizvorrichtung (11) eine Schutzhülse (13) zur Aufnahme der Heizmanschette (12) und des Speicherbehälter-Temperatursensors (6) aufweist.

8. Solarthermische Heizungsanlage nach Anspruch 7, **dadurch gekennzeichnet, dass** die Heizmanschette (12) und der Speicherbehälter-Temperatursensor (6) wasserdicht von der Schützhülse (13) umgeben sind.
